# EUROPEAN PATENT APPLICATION

(11) **EP 0 855 252 A1**
(43) Date of publication of application: **29.07.1998**
(21) Application number: 97927448.7
(22) Date of filing: 24.06.1997
(51) Int. Cl.: B25J 17/02

(54) **INDUSTRIAL ROBOT**

(30) Priority: 24.06.1996 JP 181651/96
(71) Applicant: FANUC LTD, Minamitsuru-gun, Yamanashi 401-05 (JP)
(72) Inventor: NIHEI, Ryo, Yamanashi 403 (JP); OKADA, Takeshi Fanuc Manshonharimomi Room 10-306, Yamanashi 401-05 (JP); UCHIDA, Hiroshi Fanuc Dai-3 Virakaramatsu, Yamanashi 401-05 (JP)
(74) Representative: Billington, Lawrence Emlyn
(86) International application number: JP9702178
(87) International publication number: WO9749529

(57) **Abstract**

An industrial robot capable of accurately driving an end effector by a driving control of a motor without increasing weight of a distal end of a robot arm and without an obstructive cable. A servo motor Md for driving the end effector is mounted on a supporting member for supporting the robot arm. The servo motor Md drives a clamping device of the end effector through a first end effector drive shaft in the robot arm, second and third end effector drive shafts in a wrist and a final end effector drive shaft. Since it is not necessary to provide the dviving servo motor at the end effector, the weight of the distal end of the robot arm is reduced and the obstructive cable is not necessary at the end effector.

## Description

### Technical Field

The present invention relates to an improvement of an industrial robot for performing various kinds of operations with an end effector mounted on a distal end of a wrist.

### Background Art

There is already known an industrial robot which is designed to perform a welding operation or a handling operation of an object with an end effector such as a spot welding gun or a hand mounted on a distal end of a wrist. In a conventional industrial robot, it was common to perform an opening/closing action of a clamping device of the spot welding gun or the hand by utilizing a pneumatic pressure. Recently, however, the demanded level for a precision of the welding operation and the object-handling operation has become higher, and it has become a common practice to use a motor as a drive source therefor.

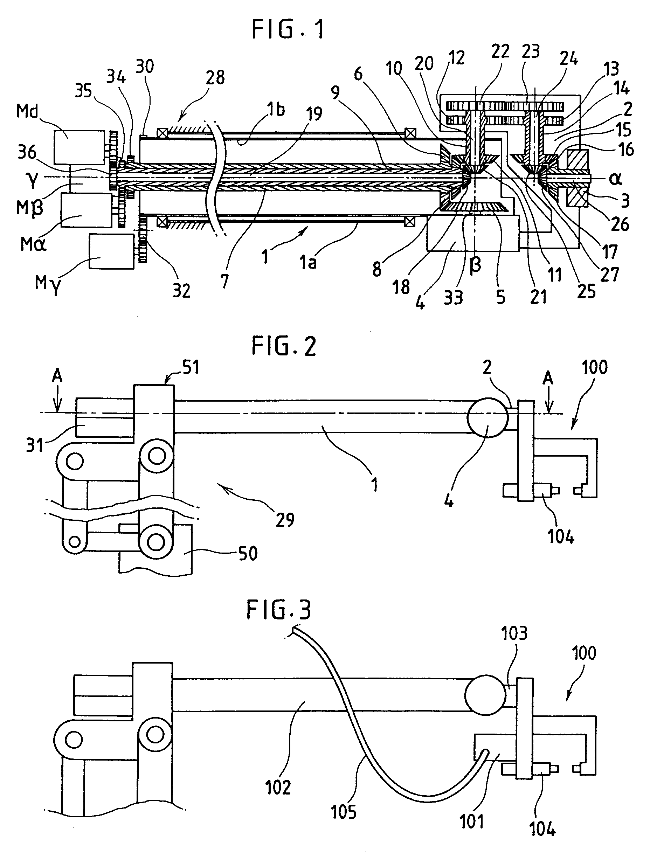

However, in the conventional industrial robot, it is a common practice to dispose a motor 101 as a drive source of the end effector 100 on the end effector 100 itself and mount the end effector on a wrist 103 positoned at a distal end of a robot arm 102 for clamping operation in the spot welding or the object handling operation, as shown in FIG. 3. The end effector 100 shown in FIG. 3 is a spot welding gun, and the motor 101 is used for opening or closing a clamping device 104 of the spot welding gun constructed by a ball screw and a ball nut, etc.

However, in such an arrangement, it is necessary to use a cable 105 for supplying an electric power to the motor 101. The cable 105 is apt to be caught by other objects in the operational environment while being moved together with the end effector 100, and is also apt to sustain damages such as a break of cable 105 itself by being repeatedly bent and stretched. To prevent this, a frequent inspection and a periodical replacement of the cable are necessary.

Further, in comparison with driving means using a pneumatic pressure, such as an air cylinder, the motor 101 is much heavyer and the weight of the cable 105 is added to the weight of the motor, so that a considerably large load exerts on the distal end of the robot arm 102. As a result, the industrial robot using the motor has a greater limitation on weight of an object to be carried by the robot hand, in comparison with the industrial robot using the air cylinder, assuming that strengths of various parts and driving forces are the same, and highter outputs of drive sources and greater rigidity of the structural members are required in order to keep the comparable carrying capacity.

### Disclosure of Invention

An object of the present invention is to provide an industrial robot capable of driving an end effector with sufficient accuracy using a motor as a driving source for the end effector without increasing a weight of a distal end of a robot arm and without an obstructive cable at the distal end.

An industrial robot of the present invention comprises a robot arm, arm supporting means for supporting the robot arm, a wrist provided on a distal end of the robot arm and having an end effector mounting portion on which an end effector is to be mounted, a motor disposed on the arm supporting means, for driving the end effector, and a power transmission mechanism for transmitting a drive force of the motor to the end effector through the robot arm, the wrist and the end effector mounting portion.

Since the motor for driving the end effector is mounted on the arm supporting means close to a body of the robot, a weight increase of the distal end of the robot arm is prevented and also an obstructive cable at the robot arm end is made unnecessary.

The arm supporting means may comprises another robot arm provided to extend from the robot body, and the motor for driving the end effector may be mounted on a distal end of this another robot arm. The power transmission mechanism may be constructed by combination of drive shafts and gears.

In a preferred embodiment, the industrial robot of the present invention comprises a wrist driving mechanism for varying an attitude of the wrist.

The wrist driving mechanism may comprise: a first rotation axis γ for rotating the wrist about a central axis of the robot arm; a second rotation axis β for swinging the wrist to bend with respect to the central axis of the robot arm; a third rotation axis α for rotating the end effector mounting portion with respect to the wrist; a first hollow drive shaft provided along the first rotation axis γ and having a first bevel gear in mesh with a bevel gear for swinging the wrist about the second rotation axis β at a distal end thereof; a second hollow drive shaft inserted into the first hollow drive shaft and having a second bevel gear at a distal end thereof; a third hollow drive shaft provided along the second rotation axis β, and having a third bevel gear in mesh with the second bevel gear at one end thereof and a first spur gear at the other end thereof; a fourth hollow drive shaft rotatably supported in a casing of the wrist, and having a second spur gear in mesh with the first spur gear at one end thereof and a fourth bevel gear at the other end thereof; and a fifth hollow drive shaft having a fifth bevel gear in mesh with the fourth bevel gear at one end thereof, for rotating the end effector mounting portion about the third rotation axis α.

The power transmission mechanism for the end effector may comprise: a first end effector driving shaft inserted into the second hollow drive shaft and having a sixth bevel gear at a distal end thereof; a second end effector driving shaft inserted into the third hollow drive shaft, and having a seventh bevel gear in mesh with the sixth bevel gear at one end thereof and a third spur gear at the other end thereof; a third end effector driving shaft inserted into the fourth hollow drive shaft, and having a fourth spur gear in mesh with the third spur gear at one end thereof and an eighth bevel gear at the other end thereof; and a final end effector driving shaft inserted into the fifth hollow drive shaft and having a ninth bevel gear in mesh with the eighth bevel gear at a proximal end thereof.

A first motor for driving the first hollow drive shaft, a second motor for driving the second hollow drive shaft, a third motor for driving the first end effector driving shaft and a fourth motor for rotating the first rotation axis are disposed on the arm supporting means.

The end effector to be mounted on the end effector mounting portion may be of any type which can be driven by the rotational output of the final shaft, such as a spot welding gun and a hand.

### Brief Description of Drawings

FIG. 1 is a sectional view of a principal part of an industrial robot according to an embodiment of the present invention;
FIG. 2 is a side view showing an outer appearance of the industrial robot as shown in FIG. 1;
FIG. 3 is a diagram for showing an example of a conventional industrial robot whose end effector is driven by a motor; and
FIG. 4 illustrates an example of the construction of an end effector mounted on the industrial robot according to the embodiment of the present invention.

### Best Mode of Carrying out the Invention

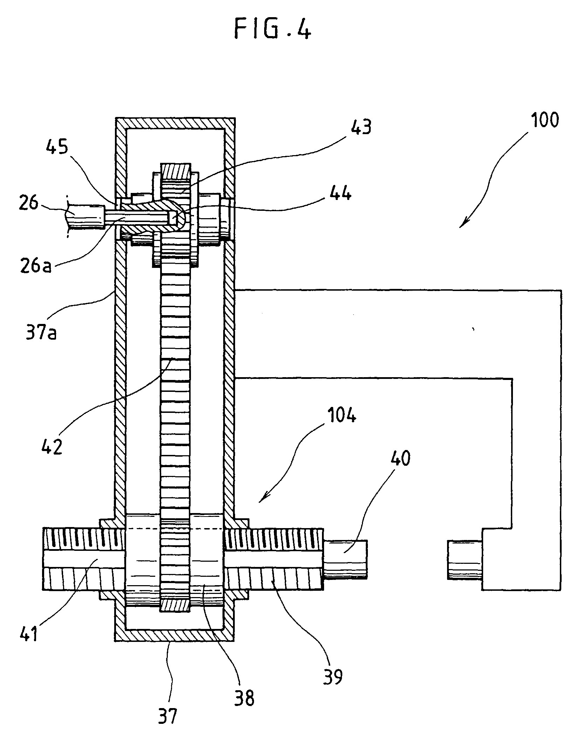

An industrial robot according to an embodiment of the present invention will be explained referring to FIGS. 1 and 2. FIG. 1 is a sectional view taken along a chain line A-A in FIG. 2. FIGS. 1 and 2 mainly illustrate a portion on a distal end side of the industrial robot 29 including a robot arm 1 and an illustration of a turnable body portion, etc. is omitted. The non-illustrated portions are similar to those of a conventional example as disclosed in FIG. 4 of Japanese Laid-Open Patent Publication No. Hei 2-41888.

As illustrated in FIG. 1, the industrial robot 29 has a first rotation axis γ for rotating a wrist 2 about a central axis of the robot arm 1, a second rotation axis β for swinging to bend the wrist 2 relative to the central axis of the robot arm 1, and a third rotation axis α for rotating an end effector mounting portion 3 relative to the wrist 2.

The robot arm 1 is constituted by an outer hollow cylinder 1a and an inner hollow cylinder 1b rotatably mounted in the outer hollow cylinder 1a. A proximal end portion of the inner hollow cylinder 1b is supported by a distal end portion of another robot arm 51 extending from a robot body portion 50. An outer-peripheral surface of the end portion of the inner hollow cylinder 1b is integrally formed with spur gear-like external teeth 30, and the inner hollow cylinder 1b is driven to rotate by a servo motor Mγ for driving the γ axis through an intermediate spur gear 32 which is rotatably supported by a shaft in a gear case 31 on the robot body side. That is, the wrist 2 provided on a distal end of the arm is rotated about the γ axis by rotating the entire inner hollow cylinder 1b, and the γ axis is a first rotation axis.

As illustrated in FIG. 1, the second rotation axis β for swinging the wrist 2 to bend relative to the central axis γ of the robot arm 1 is provided on a distal end of the inner hollow cylinder 1b so as to intersect the central axis γ at a right angle. There is provided a reduction mechanism 4 for swinging the wrist 2 on the β axis. An input shaft 33 for driving the reduction mechanism 4 is provided on a central part of the reduction mechanism 4 along the β axis, and on a distal end of the input shaft 33 there is fixedly provided a reduction bevel gear 5 of the reduction mechanism 4.

The reduction mechanism 4 has a structure similar to that of a β axis reduction mechanism 42 disclosed in Japanese Laid-Open Patent Publication No. Hei 2-41888 and has a function of rotating the wrist 2 about the β axis by a rotating force input to the input shaft 33 as well as a function of pivotally supporting the wrist 2 on a distal end of the inner hollow cylinder 1b. On the other end side of the β axis opposite to the reduction mechanism 4, a third hollow drive shaft 10 pivotally supports the wrist 2.

A first bevel gear 6 for rotating the reduction bevel gear 5 is fixedly provided on an outer surface of a distal end of a first hollow drive shaft 7 which is provided along the γ axis. The hollow drive shaft 7 is rotated by a servo motor Mβ for driving the β axis through a spur gear 34 fixedly provided on an outer surface of the proximal end of the hollow drive shaft 7. In the irrustaration of FIG. 1, as the spur gear 34 is located closer to an observer than the servo motor Mβ for driving the β axis, a gear of the servo motor Mβ in mesh with the spur gear 34 is not shown.

Means for rotating the end effector mounting portion 3 provided on the distal end of the wrist 2 about an α axis, i.e. a third rotation axis, comprises a second hollow drive shaft 9 having a second bevel gear 8, a third hollow drive shaft 10 having a third bevel gear 11 and a first spur gear 12, a fourth hollow drive shaft 14 having a second spur gear 13 and a fourth bevel gear 15, and a fifth hollow drive shaft 16 fixed integrally with the end effector mounting portion 3 and having a fifth bevel gear 17.

As illustrated in FIG. 1, the second hollow drive shaft 9 having the second bevel gear 8 on its outer and distal end surface is inserted into the first hollow drive shaft 7 to be rotatably supported. In the same manner as that of the first drive shaft 7, the second hollow drive shaft 9 is rotated by a servo motor Mα for driving the α axis through a spur gear 35 fixedly provided on an outer surface of the proximal portion of the second hollow drive shaft 9. In order to insert a hollow drive shaft into another hollow drive shaft or solid drive shaft, an axially supporting structure such as one shown in Japanese Laid-Open Patent Publication No. Hei 2-41888 may be applied if necessary. Since the technical matter thereof is already disclosed, no explanation will be given here.

Further, the third hollow drive shaft 10 having the third bevel gear 11 meshed with the bevel gear 8 is provided along the second rotation axis β in the same manner as the input shaft 33 of the reduction mechanism 4. The third hollow drive shaft 10 has a function of supporting the wrist 2 on the β axis as well as a function of the power transmission mechanism for the α axis. The first spur gear 12 fixedly provided on the outer surface of the other end of the third hollow drive shaft 10 is engaged with the second spur gear 13 rotatably supported in the casing of the wrist 2.

Further, the fourth hollow drive shaft 14 is fixedly connected to the second spur gear 13, and the fourth bevel gear 15 is fixedly provided on an outer surface of a distal end of the fourth hollow drive shaft 14 and engaged with the fifth bevel gear 17 which is fixedly provided on an outer surface of a distal end of the fifth hollow drive shaft 16 for rotating the end effector mounting portion 3 about the third rotation axis α.

With the above arrangement, by driving the servo motor Mγ for driving the γ axis, the inner hollow cylinder 1b of the robot arm 1 is rotated in the outer hollow cylinder 1a, whereby the wrist 2 mounted on the distal end of the inner hollow cylinder 1b is rotated about the γ axis. Further, by driving the servo motor Mβ for driving the β axis, the bevel gear 5 of the reduction mechanism 4 is driven through the first hollow drive shaft 7 and the first bevel gear 6, whereby the wrist 2 is swung about the β axis. Further, by driving the servo motor Mα for driving the α axis, the second hollow drive shaft 9 is rotated to make the end effector mounting portion 3 rotate about the α axis through the second bevel gear 8, the third bevel gear 11, the third hollow drive shaft 10, the first spur gear 12, the second spur gear 13, the fourth hollow drive shaft 14, the fourth bevel gear 15, the fifth bevel gear 17 and fifth hollow drive shaft 16.

Of course, by driving only the servo motor Mγ while the servo motors Mβ and Mα keep their rotational positions so as to rotate the wrist 2 about the γ axis, the rotational positions of the first hollow drive shaft 7 and the second hollow drive shaft 9 relative to the inner hollow cylinder 1b, i.e. an engaging state of the bevel gear 5 with respect to the bevel gear 6 and an engaging state of the bevel gear 8 with respect to the bevel gear 11 respectively change. Therefore, strictly speaking, it results that a swinging angle of the wrist 2 about the β axis and a rotational angle of the end effector mounting portion 3 relative to the wrist 2 respectively change, however, as long as such changes are small, no problem arises. If such errors are not negrectable, it is sufficient to control the rotations of the servo motors Mβ and Mα to make the first hollow drive shaft 7 and second hollow drive shaft 9 rotate to follow the rotation of the inner hollow cylinder 1b.

Further, in this embodiment, in order to transmit a drive force for operating the end effector 100 from the servo motor Md on the side of the robot body to the end effector mounting portion 3, a power transmission mechanism is necessary for transmitting the drive force of the servo motor Md to the end effector mounting portion 3 through the robot arm 1 and the wrist 2.

This power transmission mechanism is constituted by a first operational drive shaft 19 having a sixth bevel gear 18 on a distal end thereof, a second operational drive shaft 20 having a seventh bevel gear 21 and a third spur gear 22, a third operational drive shaft 24 having a fourth spur gear 23 and an eighth bevel gear 25 and a final operational drive shaft 26 having a ninth bevel gear 27.

As illustrated in FIG. 1, the first drive shaft 19 having the sixth bevel gear 18 on its distal end is inserted into and rotatably supported by the second hollow drive shaft 9. In the same manner as that of the first hollow drive shaft 7 and the second hollow drive shaft 9, the first operational drive shaft 19 is driven to rotate by the servo motor Md for driving the end effector through a spur gear 36 fixedly provided on the proximal portion of the first operational drive shaft 19.

Further, the second operational drive shaft 20 having the seventh bevel gear 21 meshed with the sixth bevel gear 18, is inserted into and rotatably supported by the third hollow drive shaft 10. The third spur gear 22 is fixedly provided on the other end of the second operational drive shaft 20 and meshed with the fourth spur gear 23 which is supported coaxially with the second spur gear 13 in the casing of the wrist 2. Further, the eighth bevel gear 25 is provided on a distal end of the third operational drive shaft 24 which is fixed to the fourth spur gear 23. The eighth bevel gear 25 is meshed with the ninth bevel gear 27 fixed to a proximal end of the final operational drive shaft 26 which is inserted into and rotatably supported by the fifth hollow drive shaft 16.

With the above arrangement, by driving the servo motor Md for driving the end effector, the first operational drive shaft 19 is rotated to make the final operational drive shaft 26 rotate through the sixth bevel gear 18, the seventh bevel gear 21, the second drive shaft 20, the third spur gear 22, the fourth spur gear 23, the third drive shaft 24, the eighth bevel gear 25 and the ninth bevel gear 27.

The way of utilizing the drive force of the final operational drive shaft 26 for operating the end effector 100 is merely a matter of design.

In the case where the end effector 100 is a spot welding gun, means for driving a clamping device 104 thereof is exemplified by FIG. 4.

FIG. 4 is a sectional view showing a principal part of the end effector 100 equipped with the clamping device 104. The clamping device 104 comprises a ball nut 38 mounted rotatably but axially unmovably to a casing 37 of the end effector 100 and a ball screw 39 screwed to the ball nut 38, the ball screw 39 having a spot welding electrode 40 fixedly mounted on its distal end. As shown in FIG. 4, the ball screw 39 is installed passing through the two vertically opposite walls of the casing 37, with its serration 41, axially formed along the outer peripheral surface thereof, fits into the bosses projecting from the sides of the casing 37 corresponding to the through hole so as to be unrotatable but axially movable with respect to the casing 37.

Thus, by rotating the ball nut 38, the ball screw 39 can be moved or retreated axially, the clamping device 104 can be made to clamp or unclamp an object.

A timing belt 42 for rotating the ball nut 38 is wound around the pulley-shape outer peripheral portion of the ball nut 38 and a pulley 43 provided within the casing 37 by being rotatably supported by a shaft. At the center of rotation of the pulley 43 there is provided a hole 44 having a shape fitting a polygonal-columnar engagement portion 26a formed on a distal end of the final drive shaft 26 on the side of the end effector mounting portion 3. For example, the shape of the engagement portion 26a is of a hexagonal column, and shape of the hole 44 is in the shape of the hole of a bolt with a hexagonal hole.

Further, in a mounting surface 37a of the casing 37 used when mounting the end effector 100 onto the end effector mounting portion 3 there is formed a through hole 45 for passing the distal end portion of the final drive shaft 26 therethrough, whereby, in a state of having the end effector 100 mounted on the mounting portion 3, the engagement portion 26a of the final drive shaft 26 is connected to the central portion of the pulley 43. In the example of FIG. 4, a diameter-reduced portion of the pulley 43 is loosely fitted into the through hole 45 to thereby support the pulley 43 rotatably. However, the pulley 43 may be supported through a bearing.

Thus, with the end effector mounted, when the servo motor Md is driven to rotate the final drive shaft 26, the ball nut 38 is rotated through the pulley 43 and the timing belt 42, whereby the object clamping/unclamping operation of the clamping device 104 is performed. Of course, a gear train for the power transmission may be used instead of the timing belt 42.

The end effector 100 can be various appliances including a hand for handling or manipulating its object in addition to the spot welding gun. However, as long as the end effector 100 is of a type capable of being driven by receiving the rotational force of the final drive shaft 26, any end effector 100 can be finally driven by the servo motor Md for driving the end effector through the above-described power transmission mechanism provided along the robot arm 1 and the wrist 2.

Further, if the specifications and arrangement of the constituent members of each of various end effectors 100 for receiving the power, e.g. the position of the pulley 43 in FIG. 4, the dimensions and forms of the engagement portion 26a of the final drive shaft 26 and the hole 44 of the pulley 43 side, etc. are standardized, various end effectors 100 can compatibly be used by being replaced with one another.

The servo motor Md for driving the end effector is driven and controlled by the driver of the additional shafts of the robot controller. Therefore, as in the case of the γ axis, β axis and α axis, it is possible to correct the error of meshing position caused by the change in the meshing condition between the bevel gears resulting from the rotation of other through the processing on the robot controller side. Such processing is theoretically the same as in the case of the processing for correcting the rotation error occurring as to the β axis when only the servo motor Mγ is driven to rotate the wrist 2 about the γ axis while the servo motor Mβ and Mα are at rest.

Although an embodiment of the power transmission mechanism of the present invention has been explained above by limiting it to a specific construction of the power transmission system for driving each of the γ axis, β axis and α axis, the technical idea of the embodiment can be applied directly to any industrial robot with shafts having a power transmission system similar to that illustrated in FIG. 1.

For example, in an industrial robot such as that illustrated in FIG. 3 appended to Japanese Laid-Open Patent Application No. Hei 2-48193, two pulleys and a timing-belt like member for connecting these two pulleys to each other are used in place of the spur gears 12 and 13 for driving the rotation axis α. In the case of such a structure, it is sufficient to use hollow shafts for those two pulleys so that the drive shafts corresponding to the second and third drive shafts are respectively provided within these shafts, and respective distal ends of these drive shafts there are fixedly mounted with two pulleys that correspond to the third and fourth spur gears 22 and 23, these two pulleys being connected to each other by a timing belt.

The basic technical idea of this embodiment is that the drive shafts, each used to transmit the power to the α axis of the industrial robot, are made to have a hollow structure respectively, so that into these hollow drive shafts the drive shafts for driving the end effector can be fitted, and these drive shafts for driving the end effector are connected to one another by the mechanical power transmission means such as the bevel gears, spur gears, or, depending on the cases, by timing belts, thereby transmitting the rotation of the motor of the industrial robot main body up to the end effector mounting portion 3 of the wrist 2. However, when the power transmission system for each of the γ axis, β axis and α axis is constructed as in the case of the example illustrated in FIG. 1, it is also possible, depending on the structure of the reduction gear 4, to construct the power transmission system having a different path for driving the end effector.

If no hindrance occurs even when the input shafts 33 of the reduction gear 4 has a hollow structure, and a shaft passing therethrough is made to pass through the entire reduction gear 4, the second drive shaft 20 can be inserted thereinto for being installed therein, and with respect to a one-dot chain line drawn horizontally in FIG. 1, the seventh bevel gear 21, second drive shaft 20, third spur gear 22, fourth spur gear 23, third drive shaft 24 and eighth bevel gear 25 are arranged. Of course, in this case, the second drive shaft 20 and the third drive shaft 24 are not fitted into the drive shafts 10 and 14, which are used to transmit the power to the α axis, so that each of the drive shafts 10 and 14 need not to have hollow structure.

According to the present invention, the driving motor is removed from the end effector mounted on the wrist of the industrial robot, and the end effector is driven by the motor provided on the body of the industrial robot, thereby contributing to the reduction of weight of the distal end of the robot and making it unnecessary to use a cable on the distal end of the robot arm.

As a result, troubles of the end effector due to a breakage of the cable can be eliminated and an inspection for cable maintenance become unnecessary. Further, since the weight of the distal end of the robot arm can be reduced, a larger load can be carried by the end effector such as a robot hand. In addition, acceleration/deceleration of the rotation of each shaft can also be made at higher rates.

## Claims

1. An industrial robot comprising:
a robot arm;
an arm supporting means for supporting said robot arm;
a wrist provided on a distal end of said robot arm and having an end effector mounting portion onto which an end effector is to be mounted;
a motor mounted on said arm supporting means, for driving said end effector; and
a power transmission mechanism for transmitting a driving force of said motor to said end effector through said robot arm, said wrist and said end effector mounting portion.

2. An industrial robot according to claim 1, said arm supporting means comprising another robot arm extending from a robot body, and said motor being mounted on a distal end of said another robot arm.

3. An industrial robot according to claim 1 or 2, said power transmission mechanism comprising drive shafts and gears.

4. An industrial robot according to claim 1 or 2, further comprising a wrist driving mechanism for varying an attitude of said wrist.

5. An industrial robot according to claim 4, said wrist driving mechanism comprising:
a first rotation axis γ for rotating said wrist about a central axis of said robot arm;
a second rotation axis β for swinging said wrist to bend with respect to the central axis of said robot arm;
a third rotation axis α for rotating said end effector mounting portion with respect to said wrist;
a first hollow drive shaft provided along said first rotation axis γ and having a first bevel gear in mesh with a bevel gear for swinging said wrist about said second rotation axis β at a distal end thereof;
a second hollow drive shaft inserted into said first hollow drive shaft and having a second bevel gear at a distal end thereof;
a third hollow drive shaft provided along said second rotation axis β, and having a third bevel gear in mesh with said second bevel gear at one end thereof and a first spur gear at the other end thereof;
a fourth hollow drive shaft rotatably supported in a casing of said wrist, and having a second spur gear in mesh with said first spur gear at one end thereof and a fourth bevel gear at the other end thereof; and
a fifth hollow drive shaft having a fifth bevel gear in mesh with said fourth bevel gear at one end thereof, for rotating said end effector mounting portion about said third rotation axis α, and
said power transmission mechanism comprising:
a first end effector driving shaft inserted into said second hollow drive shaft and having a sixth bevel gear at a distal end thereof;
a second end effector driving shaft inserted into said third hollow drive shaft, and having a seventh bevel gear in mesh with said sixth bevel gear at one end thereof and a third spur gear at the other end thereof;
a third end effector driving shaft inserted into said fourth hollow drive shaft, and having a fourth spur gear in mesh with said third spur gear at one end thereof and an eighth bevel gear at the other end thereof; and
a final end effector driving shaft inserted into said fifth hollow drive shaft and having a ninth bevel gear in mesh with said eighth bevel gear at a proximal end thereof, and
wherein a first motor for driving said first hollow drive shaft, a second motor for driving said second hollow drive shaft, a third motor for driving said first end effector driving shaft and a fourth motor for rotating said first rotation axis are disposed on said arm supporting means.

6. An industrial robot according to claim 1 or 2, said end effector comprising a spot welding gun.

7. An industrial robot according to claim 1 or 2, said end effector comprising a hand.
